# EUROPÄISCHE PATENTSCHRIFT

(11) **EP 3 159 824 B1**
(45) Veröffentlichungstag und Bekanntmachung des Hinweises auf die Patenterteilung: **12.08.2020**
(21) Anmeldenummer: 15190958.7
(22) Anmeldetag: 22.10.2015
(51) Int. Cl.: G06F 21/60, G06F 21/10

(54) **VERFAHREN ZUR VERARBEITUNG EINES VERSCHLÜSSELTEN DRUCKAUFTRAGS**
METHOD FOR PROCESSING AN ENCRYPTED PRINT JOB
PROCEDE DE TRAITEMENT D'UNE TACHE D'IMPRESSION ENCODEE

(43) Veröffentlichungstag der Anmeldung: 26.04.2017
(73) Patentinhaber: IDEMIA Germany GmbH, 99109 Flintbek (DE)
(72) Erfinder: WINTER, Christian, 33378 Rheda-Wiedenbrück (DE); RUST, Carsten, 33106 Paderborn (DE)

(56) Entgegenhaltungen:
- EP-A1- 1 197 828
- WO-A1-01/91007
- WO-A1-2004/050369

## Beschreibung

Die Erfindung betrifft ein Verfahren zur Verarbeitung eines verschlüsselten Druckauftrags durch einen 3D-Drucker sowie ein Sicherheitsmodul und ein System aus einem 3D-Drucker und einem Sicherheitsmodul.

Seit der Einführung von 3D-Druckern werden diese häufig im Bereich des Rapid Prototyping in Firmen genutzt, um zeitnah Einzelteile oder Baugruppen von Prototypen herzustellen und diese auf ihre Funktion zu prüfen. Dabei kann es sich bei den Prototypen um Projekte handeln, in deren Entwicklung viel Zeit und Geld investiert wurde. Ein Ausspähen der im Zuge des Rapid Prototyping hergestellten Bauteile muss daher zwingend vermieden werden. Da üblicherweise Bauteile an Computern, beispielsweise durch CAD-Programme, konstruiert werden, müssen diese Bauteile bei dem Transport von einem Computer zu einem 3D-Drucker gegen ein Ausspähen durch Dritte geschützt werden.

Ein ähnliches Szenario ergibt sich seit der Einführung von 3D-Druckern für Heimanwender. Es ist beispielsweise möglich, dass ein Heimanwender sich ein zu druckendes Objekt von einem Dienstleister im Internet herunterlädt und dieses an seinem privatem 3D-Drucker herstellt. Da auch hier in der Entwicklung und Bereitstellung der zu druckenden Objekte Investitionen gebunden sind, besteht ein Interesse daran, dass ein einmal gedrucktes Objekt durch den Heimanwender nicht widerrechtlich erneut gedruckt oder gar das zu druckende Objekt aus dem Druckantrag ausgelesen werden kann.

Hierzu beschreibt beispielsweise die US 2013/0235412 A1 ein System zum Drucken von 3D Objekten, welches die 3D-Objektdaten vor einem Kopieren schützt, indem die Daten in eine Reihe von Anweisungen zum Drucken des 3D-Objekts zerlegt und diese Anweisungen stückweise an eine Druckeinrichtung gesendet werden. Weiters beschreibt EP1197828 ein System zum sicheren Drucken von Dokumenten.

Der Erfindung liegt daher die Aufgabe zugrunde, ein verbessertes Verfahren zur Verarbeitung eines verschlüsselten Druckauftrags durch einen 3D-Drucker sowie ein hierbei verwendetes Sicherheitsmodul und ein System aus einem 3D-Drucker und einem Sicherheitsmodul zu schaffen.

Die der Erfindung zugrunde liegende Aufgabe wird durch die Merkmale der unabhängigen Patentansprüche gelöst. Bevorzugte Ausführungsformen der Erfindung werden in den abhängigen Patentansprüchen angegeben.

Die Erfindung betrifft ein Verfahren zur Verarbeitung eines verschlüsselten Druckauftrags durch einen 3D-Drucker, wobei der 3D-Drucker mit einem Sicherheitsmodul über einen abhörsicheren Kommunikationskanal verbunden ist. Das mit dem 3D-Drucker verbundene Sicherheitsmodul weist einen geschützten Speicherbereich auf, in dem ein privater Schlüssel eines ersten asymmetrischen Schlüsselpaars gespeichert ist. Das Verfahren beinhaltet zunächst das Empfangen eines Datensatzes durch den 3D-Drucker. Der Datensatz enthält einen asymmetrisch mit einem ersten öffentlichen Schlüssel des ersten asymmetrischen Schlüsselpaars verschlüsselten symmetrischen Schlüssel und einen mit dem symmetrischen Schlüssel verschlüsselten Druckauftrag.

Nachdem der Datensatz durch den 3D-Drucker empfangen wurde, übermittelt der 3D-Drucker den Datensatz an das Sicherheitsmodul. Das Sicherheitsmodul entschlüsselt dann mit dem in dem geschützten Speicherbereich gespeicherten privaten Schlüssel des ersten asymmetrischen Schlüsselpaares den symmetrischen Schlüssel und entschlüsselt dann mit dem so erhaltenen symmetrischen Schlüssel den verschlüsselten Druckauftrag. Anschließend übermittelt das Sicherheitsmodul den durch die Entschlüsselung enthaltenen entschlüsselten Druckauftrag über den abhörsicheren Kommunikationskanal an den 3D-Drucker.

Bei dem Sicherheitsmodul kann es sich beispielsweise um ein in dem 3D-Drucker nachrüstbares Modul mit einem Token handeln, wobei der Token mit einem handelsüblichen 3D-Drucker verbunden werden kann. Bei dem Token kann es sich beispielsweise um ein USB-Token oder eine Smartcard handeln, vorausgesetzt der 3D-Drucker verfügt über entsprechende Steckplätze. Dabei kann auf dem Token beispielsweise das Schlüsselmaterial des Sicherheitsmoduls gespeichert sein. Somit kann beispielsweise ein privater Nutzer eines 3D-Druckers seinen 3D-Drucker durch Einsetzen eines Sicherheitsmoduls bzw. des zugehörigen Tokens so umrüsten, dass der 3D-Drucker anschließend in der Lage ist, verschlüsselte Druckaufträge zu verarbeiten.

Ausführungsformen könnten den Vorteil haben, dass durch die verschlüsselte Übertragung des Druckauftrags ein Ausspähen des Inhalts des Druckauftrags effektiv vermieden wird. Dabei liegt der Druckauftrag nur in dem Sicherheitsmodul in entschlüsselter Form vor und wird anschließend über einen abhörsicheren Kanal an den 3D-Drucker übermittelt. Somit besteht zu keinem Zeitpunkt die Möglichkeit, den Klartext des Druckauftrags und damit das zu druckende Objekt aus dem Drucker oder dem Sicherheitsmodul auszulesen. Hierzu muss das Sicherheitsmodul so gestaltet sein, dass bei der Entschlüsselung des Druckauftrags der Klartext des Druckauftrags ausschließlich in geschützten Speicherbereichen des Sicherheitsmoduls abgelegt bzw. zwischengespeichert wird.

Nach einer Ausführungsform ist das Sicherheitsmodul nach dem Verbinden mit dem 3D-Drucker untrennbar mit dem 3D-Drucker verbunden. Durch die untrennbare Verbindung zwischen 3D-Drucker und Sicherheitsmodul könnte vermieden werden, dass ein Druckauftrag, welcher für einen bestimmten 3D-Drucker ausgegeben wurde auf einem anderen 3D-Drucker ausgeführt wird, selbst wenn das zugehörige Sicherheitsmodul mit einem anderen Drucker verbunden wird. Beispielsweise kann hierzu in dem Sicherheitsmodul eine Kennung hinterlegt werden, sodass nach einem initialen Verbinden des Sicherheitsmoduls mit dem 3D-Drucker in dem 3D-Drucker die Kennung des Sicherheitsmoduls gespeichert ist. Hierdurch könnte eine feste Zuordnung des Sicherheitsmoduls zu dem 3D-Drucker erfolgen. Dies wird später noch näher erläutert werden.

Ferner kann vorgesehen sein, dass jeder erste private Schlüssel lediglich ein einziges Mal vergeben wird, sodass der erste private Schlüssel eindeutig einem Sicherheitsmodul zugeordnet werden kann. Datensätze könnten dann so verschlüsselt werden, dass sie nur von einem einzigen Sicherheitsmodul gelesen werden können. Da wiederum dieses Sicherheitsmodul untrennbar mit einem bestimmten 3D-Drucker verbunden ist, können Datensätze so verschlüsselt werden, dass sie nur durch einen einzigen 3D-Drucker verarbeitet werden können.

Nach einer weiteren Ausführungsform umfasst die untrennbare Verbindung des Sicherheitsmoduls mit dem 3D-Drucker ein mechanisches Verbinden. Beispielsweise kann das Sicherheitsmodul als Token oder Chipkarte vorliegen, welches in einen entsprechenden Steckplatz oder ein entsprechendes Lesegerät des 3D-Druckers eingesetzt wird. Dabei kann vorgesehen sein, dass das Sicherheitsmodul nach dem Verbinden mit dem 3D-Drucker mit dem Steckplatz verklebt wird. Ferner ist es auch möglich, dass ein Sicherheitsmodul bereits bei der Herstellung eines 3D-Druckers in den 3D-Drucker eingesetzt wird, und beispielsweise in einem Bauteil des 3D-Druckers eingegossen oder festgelötet wird. Eine mechanische Verbindung könnte dabei den Vorteil haben, dass ein Auslesen der übertragenen Informationen zwischen Sicherheitsmodul und 3D-Drucker beispielsweise gegenüber einer drahtlosen Verbindung erschwert wird. Gleichzeitig wird ein Entfernen des Sicherheitsmoduls aus dem 3D-Drucker effektiv vermieden.

Nach einer Ausführungsform wird aufgrund des Verbindens des Sicherheitsmoduls mit dem 3D-Drucker ein Verknüpfungsprozess auf dem 3D-Drucker und/oder dem Sicherheitsmodul gestartet. Die untrennbare Verbindung des Sicherheitsmoduls mit dem 3D-Drucker umfasst dann als Resultat des Verknüpfungsprozesses eine eindeutige logische Verknüpfung des Sicherheitsmoduls mit dem 3D-Drucker. Dabei kann beispielsweise im Zuge des Verknüpfungsprozesses ein Austausch von Kennungen und/oder anderen Identifikatoren, wie beispielsweise einer GUID des 3D-Druckers und/oder des Sicherheitsmoduls stattfinden, wobei der 3D-Drucker und/oder das Sicherheitsmodul die GUID des jeweils anderen Gerätes in einem Speicherbereich ablegt. Dabei muss gewährleistet sein, dass die gespeicherten Identifikatoren des Sicherheitsmoduls bzw. des 3D-Druckers nicht aus den jeweiligen Speicherbereichen des 3D-Druckers bzw. des Sicherheitsmoduls gelöscht werden können. Andernfalls wäre der Verknüpfungsvorgang reversibel und die Untrennbarkeit der logischen Verbindung nicht gegeben.

Sobald dann der 3D-Drucker und/oder das Sicherheitsmodul benutzt werden sollen, fragt das Sicherheitsmodul die GUID des 3D-Druckers ab oder umgekehrt und vergleicht die so empfangene GUID mit der in dem Speicherbereich abgelegten Information. Dabei werden die Funktionalitäten des Sicherheitsmoduls und/oder des 3D-Druckers nur dann freigeschaltet, wenn die empfangene GUID mit der in dem Speicherbereich abgelegten GUID übereinstimmt. Andernfalls kann beispielsweise eine Fehlermeldung ausgegeben werden.

Ausführungsformen könnten den Vorteil haben, dass mit der zuvor beschriebenen logischen Verknüpfung die untrennbare Verbindung selbsttätig durch den 3D-Drucker und/oder das Sicherheitsmodul hergestellt werden kann. Für einen Endbenutzer ist es daher nicht notwendig, in den Verknüpfungsprozess einzugreifen, sondern es genügt, dass ein Endbenutzer beispielsweise das Sicherheitsmodul in den 3D-Drucker einsetzt. Dabei kann das Sicherheitsmodul so konfiguriert sein, dass es sich vor seiner ersten Benutzung in einem Auslieferungszustand befindet, wobei bei der ersten Aktivierung des Sicherheitsmoduls zunächst die GUID des mit dem Sicherheitsmodul verbundenen 3D-Druckers abgefragt wird. Anschließend speichert das Sicherheitsmodul die abgefragte GUID des 3D-Druckers dauerhaft in einem geschützten Speicherbereich. Als Resultat kann das Sicherheitsmodul nach dem erstmaligen Verbinden mit einem 3D-Drucker ausschließlich mit diesem 3D-Drucker verwendet werden.

Nach einer weiteren Ausführungsform erfolgt das untrennbare Verbinden dergestalt, dass ein nachträgliches Entfernen des Sicherheitsmoduls von dem 3D-Drucker zu einer zumindest teilweisen Funktionsunfähigkeit des Druckers und/oder des Sicherheitsmoduls führt. Beispielsweise ist es möglich, dass das Sicherheitsmodul aufgrund einer mechanischen Verbindung die untrennbare Verbindung mit dem Drucker eingeht. Beispielsweise kann es sich bei der mechanischen Verbindung um eine Lötverbindung oder eine Klebverbindung handeln. Dabei kann insbesondere eine Lötverbindung und allgemeiner die mechanische Verbindung so gestaltet sein, dass bei einem Heraustrennen des Sicherheitsmoduls aus dem 3D-Drucker Schaltkreise in dem Sicherheitsmodul und/oder dem 3D-Drucker zerstört werden, sodass die Funktion der jeweiligen Elemente eingeschränkt oder vollständig gestört ist. Beispielsweise wäre es möglich, dass ein Sicherheitsmodul nicht als Nachrüstteil mit einem 3D-Drucker verbunden wird, sondern bereits bei der Herstellung des 3D-Druckers in den 3D-Drucker eingebaut wird und beispielsweise in einem Element in den 3D-Drucker eingegossen wird. Ferner kann das Sicherheitsmodul auch als integraler Bestandteil der internen Schaltkreise eines 3D-Druckers gestaltet sein. In diesem Fall würde durch ein Entfernen des Sicherheitsmoduls auch die Funktionsfähigkeit des Druckers zumindest eingeschränkt. Es ist jedoch auch möglich die interne Logik eines Sicherheitsmoduls und/oder eines 3D-Druckers so zu gestalten, dass nach einem initialen logischen Verknüpfungsprozess, wie er beispielsweise oben beschrieben wurde, ein Entfernen des Sicherheitsmoduls zu einer Funktionsunfähigkeit des 3D-Druckers und/oder des Sicherheitsmoduls auf logischer Ebene führt.

Ausführungsformen könnten den Vorteil haben, dass effektiv vermieden werden kann, dass ein Sicherheitsmodul mit einem Drucker verwendet wird, für den es nicht bestimmt ist. Somit kann eine missbräuchliche Benutzung des Sicherheitsmoduls vermieden werden.

Nach einer weiteren Ausführungsform ist in dem Sicherheitsmodul ein zweiter öffentlicher Schlüssel eines zweiten asymmetrischen Schlüsselpaares gespeichert, wobei zumindest ein Teil des Datensatzes mit einem zweiten privaten Schlüssel des zweiten asymmetrischen Schlüsselpaares signiert ist. Dabei verifiziert das Sicherheitsmodul nach dem Empfangen des Datensatzes von dem 3D-Drucker die Signatur mit dem zweiten öffentlichen Schlüssel. Das Entschlüsseln oder Übermitteln des entschlüsselten Druckauftrags über den Kommunikationskanal an den 3D-Drucker erfolgt in diesem Fall nur dann, wenn die Signatur des Datensatzes durch das Sicherheitsmodul verifiziert wurde. Die Signatur kann dabei beispielsweise von einem Herausgeber des Datensatzes mithilfe eines zweiten privaten Schlüssels des zweiten asymmetrischen Schlüsselpaares erzeugt werden. Dabei ist es sowohl möglich, dass die Signatur über den verschlüsselten Druckauftrag als auch über den entschlüsselten Druckauftrag gebildet wird. Im zweiten Fall müsste dann zur Verifizierung der Signatur zunächst der Druckauftrag in dem Datensatz entschlüsselt werden.

Ausführungsformen könnten den Vorteil haben, dass durch die Verwendung einer Signatur eine Verfälschung der übermittelten Daten vermieden werden kann. So würde bei der Überprüfung der Signatur sofort auffallen, wenn beispielsweise Daten in dem Druckauftrag manipuliert oder beispielsweise durch eine fehlerhafte oder unvollständige Übertragung des Datensatzes oder anderweitig verfälscht worden wären. Ferner ist durch die Verwendung einer Signatur gleichzeitig die Authentizität des Datensatzes gewährleistet, da die Signatur eindeutig einem Herausgeber des Datensatzes zugeordnet werden kann. Die Signaturprüfung könnte damit eine bestehende CRC-Prüfung vollständig ersetzen.

Eine weitere Ausführungsform beinhaltet das Einfügen einer ersten Prüfsumme in den Datensatz, sodass der Datensatz eine erste Prüfsumme des verschlüsselten Druckauftrags, des Druckauftrags selbst und/oder des Datensatzes enthält. In diesem Fall umfasst das Verfahren ferner die Schritte des Berechnens einer zweiten Prüfsumme des verschlüsselten Druckauftrags, des Druckauftrags und/oder des Datensatzes durch das Sicherheitsmodul und der anschließende Vergleich der ersten Prüfsumme und der zweiten Prüfsumme durch das Sicherheitsmodul. Das Übermitteln des Druckauftrags an den 3D-Drucker erfolgt in diesem Fall nur dann, wenn die zweite Prüfsumme und die erste Prüfsumme identisch sind. Zur Bestimmung der Prüfsumme kann beispielsweise das im Stand der Technik bekannte Verfahren der zyklischen Redundanzprüfung (CRC: Cyclic Redundancy Check) verwendet werden. Wie die zuvor beschriebene Einfügung der Signatur dient auch die Verwendung einer Prüfsumme der Sicherung der Integrität der empfangenen Daten.

Nach einer weiteren Ausführungsform beinhaltet das Verfahren ferner das Löschen des Datensatzes des verschlüsselten Druckauftrags und/oder des Druckauftrags beispielsweise unmittelbar nach Übermittlung des Druckauftrags an den 3D-Drucker. Hierdurch könnte effektiv vermieden werden, dass ein Druckauftrag beispielsweise durch eine Manipulation des Sicherheitsmoduls mehrfach ausgeführt wird.

Nach einer weiteren Ausführungsform ist in dem Datensatz dem Druckauftrag eine Auftragsnummer zugeordnet. In diesem Fall weist das Sicherheitsmodul eine in dem geschützten Speicherbereich des Sicherheitsmoduls gespeicherte Auftragsliste auf, wobei die Auftragsliste die Auftragsnummern von Druckaufträgen beinhaltet, die zuvor an den 3D-Drucker übermittelt wurden. Das Verfahren umfasst dann ferner das Lesen der dem Druckauftrag zugeordneten Auftragsnummer und das anschließende Prüfen, ob die so ermittelte Auftragsnummer in der Auftragsliste des Sicherheitsmoduls enthalten ist. Die Übermittlung des entschlüsselten Druckauftrags an den 3D-Drucker erfolgt in diesem Fall nur dann, wenn die Auftragsnummer nicht in der Auftragsliste enthalten ist.

Ausführungsformen könnten den Vorteil haben, dass durch das Führen einer Auftragsliste eine Mehrfachausführung eines Druckauftrags vermieden werden kann. So könnte beispielsweise ein Endnutzer einen Druckauftrag auf dem Weg zum 3D-Drucker abfangen und mehrfach an den 3D-Drucker übermitteln. In diesem Fall könnte das Sicherheitsmodul ohne eine Auftragsliste nicht feststellen, ob der Druckauftrag zuvor bereits ausgeführt wurde. Beispielsweise könnte so ein Endnutzer einen im Internet erworbenen Druckauftrag mehrfach ausführen, ohne für die entsprechende Zahl der Ausführungen ein Entgelt zu entrichten.

Nach einer weiteren Ausführungsform ist die Auftragsnummer mit dem symmetrischen Schlüssel oder mit dem ersten öffentlichen Schlüssel verschlüsselt, sodass das Sicherheitsmodul die Auftragsnummer bei der Entschlüsselung des Datensatzes ermitteln kann. Das Lesen der Auftragsnummer beinhaltet in diesem Fall ein Entschlüsseln der Auftragsnummer. Ausführungsformen könnten den Vorteil haben, dass durch die Verschlüsselung der Auftragsnummer eine Manipulation der Auftragsnummer vermieden werden könnte. Beispielsweise könnte nämlich ein Endbenutzer einen Druckauftrag bzw. einen Datensatz auslesen und dahingehend manipulieren, dass die Auftragsnummer sich von der ursprünglichen Auftragsnummer unterscheidet. In diesem Fall könnte das Sicherheitsmodul nicht feststellen, dass der Druckauftrag zuvor bereits ausgeführt wurde. Da dem Endbenutzer jedoch die Schlüssel, welche in dem Sicherheitsmodul gespeichert sind bzw. in dem Datensatz enthalten sind, nicht bekannt sind, kann eine Manipulation der Auftragsnummer durch Verschlüsselung der Auftragsnummer vermieden werden.

Nach einer weiteren Ausführungsform ist die Auftragsnummer mit dem zweiten privaten Schlüssel signiert, wobei das Verfahren ferner das Verifizieren der Signatur der Auftragsnummer mithilfe des zweiten öffentlichen Schlüssels durch das Sicherheitsmodul umfasst. Die Übermittlung des Druckauftrags an den 3D-Drucker erfolgt in diesem Fall nur dann, wenn die Signatur der Auftragsnummer durch das Sicherheitsmodul verifiziert wurde. Dies könnte ebenfalls der Sicherung der Integrität der Auftragsnummer, welche in dem Datensatz enthalten ist, dienen.

Nach einer weiteren Ausführungsform beinhaltet der entschlüsselte Druckauftrag ein in einer Objektbeschreibungssprache codiertes zu druckendes Objekt. Der 3D-Drucker weist ferner eine Druckeinheit auf, wobei die Druckeinheit dazu ausgebildet ist, eine Sequenz von Befehlen in einer generischen Druckersteuerungssprache zu interpretieren, sodass durch die Druckeinheit ein dreidimensionales Objekt auf der Grundlage der interpretierten Befehle gedruckt wird. Das Verfahren beinhaltet dann das Konvertieren des Druckauftrags in eine Sequenz von Befehlen in der generischen Druckersteuerungssprache durch Interpretation des in dem entschlüsselten Druckauftrag codierten zu druckenden Objekts durch das Sicherheitsmodul. Anschließend wird die Sequenz von Befehlen an die Druckeinheit durch das Sicherheitsmodul über den abhörsicheren Kommunikationskanal direkt übertragen.

Beispielsweise kann es sich bei der Objektbeschreibungssprache um eine STL-Schnittstelle handeln, welche als eine Schnittstelle zwischen einem CAD-System und weiteren ein CAD-Objekt verarbeitenden Systemen wie 3D-Druckern dient. Üblicherweise werden die an einem Drucker empfangenen STL-Dateien von einem Druckerprozessor interpretiert, sodass das Objekt, welches in den STL-Dateien beschrieben ist, rekonstruiert werden kann. Anschließend kann der Druckerprozessor das geometrische Objekt in eine generische Druckersteuerungssprache übersetzen. Hierzu kann beispielsweise im Falle eines 3D-Druckers das zu druckende Objekt in eine Vielzahl dünner Schichten zerlegt werden, wobei für jede der Schichten die Bewegungen eines Druckkopfs numerisch dargestellt werden. Die so erzeugten Befehle werden dann durch einen Druckkopf ausgeführt und das zu druckende Objekt wird durch den 3D-Drucker hergestellt.

Ausführungsformen könnten den Vorteil haben, dass das Sicherheitsmodul die Funktion eines Druckerprozessors einnimmt. Die Übersetzung des zu druckenden Objekts in Druckersteuerungsbefehle erfolgt dann direkt in dem Sicherheitsmodul. Da das Sicherheitsmodul jedoch gegen Zugriff von außen abgeschirmt ist, liegt zu keinem Zeitpunkt das zu druckende Objekt in einer nicht geschützten Umgebung vor und kann daher nicht ausgelesen werden. Die einzige Möglichkeit das zu druckende Objekt zu rekonstruieren bestünde darin, aus den Druckerbefehlen zurück auf das ursprüngliche Objekt zu rechnen. Dies ist jedoch im Allgemeinen schwer oder gar nicht möglich.

Bei der zuvor beschriebenen Ausführungsform kann beispielsweise der Drucker so ausgebildet sein, dass er beim Empfang eines Druckauftrags bzw. eines Datensatzes zunächst prüft, ob es sich um einen verschlüsselten Druckauftrag oder um einen unverschlüsselten Druckauftrag handelt. Ist der Druckauftrag ein unverschlüsselter Druckauftrag, leitet der 3D-Drucker den Druckauftrag direkt an seinen internen Druckerprozessor weiter. Dieser kann dann in gewohnter Art und Weise den Druckauftrag interpretieren und zur Verarbeitung an die Druckeinheit weitergeben. Handelt es sich jedoch um einen verschlüsselten Druckauftrag, kann der 3D-Drucker dazu ausgebildet sein, den Datensatz an das Sicherheitsmodul zu übergeben, sodass die Interpretation der empfangenen Daten durch das Sicherheitsmodul erfolgt. Der druckereigene Druckprozessor wird in diesem Fall nicht angesprochen.

Alternativ kann auch der 3D-Drucker dazu ausgebildet sein jeden empfangenen Datensatz zunächst an das Sicherheitsmodul weiterzuleiten. In diesem Fall ist das Sicherheitsmodul dazu ausgebildet zu entscheiden, ob der empfangene Druckauftrag von dem Druckerprozessor des 3D-Druckers oder von dem Prozessor des Sicherheitsmoduls verarbeitet werden soll.

In einem weiteren Aspekt betrifft die Erfindung ein Sicherheitsmodul mit zumindest einem geschützten Speicherbereich und einer Kommunikationsschnittstelle, wobei in dem geschützten Speicherbereich ein privater Schlüssel eines asymmetrischen Schlüsselpaares gespeichert ist. Das Sicherheitsmodul ist dazu ausgebildet, einen Datensatz in einem 3D-Drucker über die Kommunikationsschnittstelle zu empfangen, wobei der Datensatz einen asymmetrisch mit einem ersten öffentlichen Schlüssel des ersten asymmetrischen Schlüsselpaares verschlüsselten symmetrischen Schlüssel und einen mit dem symmetrischen Schlüssel verschlüsselten Druckauftrag enthält. Das Sicherheitsmodul ist ferner dazu ausgebildet, den asymmetrisch verschlüsselten symmetrischen Schlüssel mithilfe des ersten privaten Schlüssels zu entschlüsseln, den verschlüsselten Druckauftrag mithilfe des symmetrischen Schlüssels zu entschlüsseln und den entschlüsselten Druckauftrag über die Kommunikationsschnittstelle an den 3D-Drucker zu übermitteln.

In einem weiteren Aspekt betrifft die Erfindung ein System aus einem 3D-Drucker und einem Sicherheitsmodul, wie es zuvor beschrieben wurde, wobei der 3D-Drucker über einen abhörsicheren Kommunikationskanal mit dem Sicherheitsmodul verbunden ist.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden bevorzugte Ausführungsformen der Erfindung anhand der Zeichnungen näher erläutert. Es zeigen:
- Figur 1: ein Blockdiagramm eines Systems mit einem 3D-Drucker, einem Sicherheitsmodul und einem Objektanbieter und
- Figur 2: ein Flussdiagramm eines Verfahrens zur Verarbeitung eines Datensatzes.

Im Folgenden werden einander ähnliche Elemente mit den gleichen Bezugszeichen gekennzeichnet.

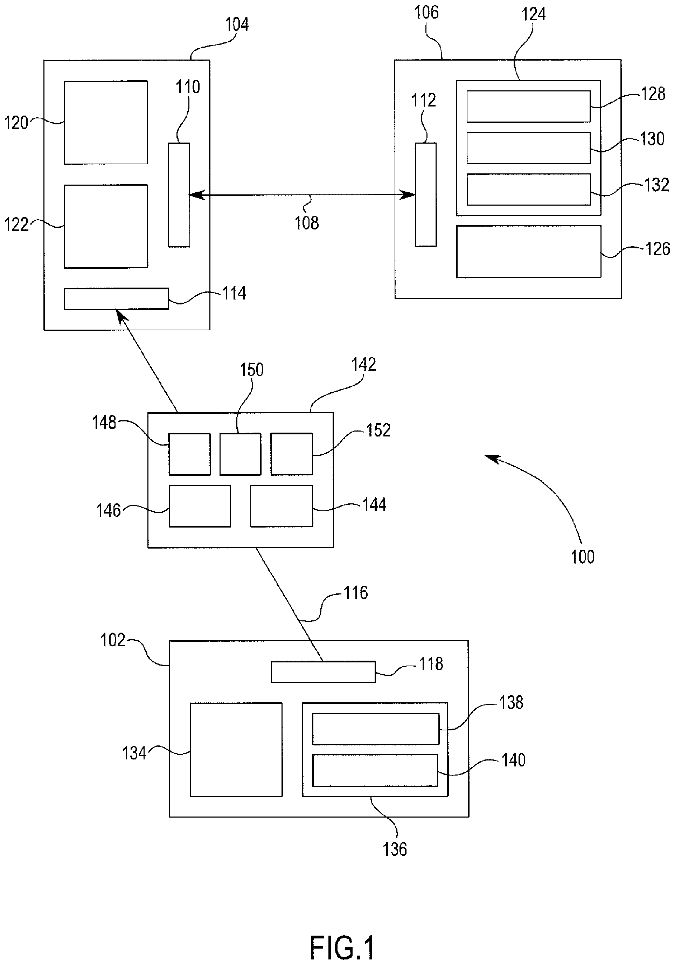

Die Figur 1 zeigt ein Blockdiagramm eines Systems 100 mit einem Objektanbieter 102, einem 3D-Drucker 104 und einem Sicherheitsmodul 106. Das Sicherheitsmodul 106 ist über einen Kommunikationskanal 108 mit dem 3D-Drucker 104 verbunden. Hierzu weisen sowohl der 3D-Drucker 104 als auch das Sicherheitsmodul 106 je eine Kommunikationsschnittstelle 110, 112 auf. Über eine weitere Kommunikationsschnittstelle 114 ist der 3D-Drucker 104 ferner in der Lage, eine Kommunikationsverbindung 116 mit einer entsprechenden Kommunikationsschnittstelle 118 des Objektanbieters 102 aufzubauen.

Bei dem Kommunikationskanal 108 zwischen dem 3D-Drucker 104 und dem Sicherheitsmodul 106 handelt es sich vorzugsweise um einen abhörsicheren Kommunikationskanal. Ferner ist es möglich, dass über die Schnittstellen 110 und 112 auch eine normale, unverschlüsselte Kommunikationsverbindung zwischen dem 3D-Drucker 104 und dem Sicherheitsmodul 106 aufgebaut wird. Bei der Kommunikationsverbindung 116 zwischen dem Objektanbieter 102 und dem 3D-Drucker 104 kann es sich beispielsweise um eine Internetverbindung oder eine sonstige Netzwerkverbindung handeln.

Der 3D-Drucker 104 weist neben den beiden Kommunikationsschnittstellen 110 und 114 ferner eine Druckeinheit 120 sowie einen Druckprozessor 122 auf. Der Druckprozessor 122 ist dabei dazu ausgebildet, einen Druckauftrag, welcher beispielsweise ein zu druckendes Objekt in einem STL-Format enthält, zu verarbeiten und Druckerbefehle in einer druckerspezifischen Steuerungssprache an die Druckeinheit 120 zu übermitteln. Die Druckeinheit 120 ist dann dazu ausgebildet, die empfangenen Druckbefehle auszuführen, wodurch schrittweise ein Objekt gedruckt wird, welches sich aus dem Druckauftrag ergibt.

Das Sicherheitsmodul 106 weist neben der Kommunikationsschnittstelle 112 zumindest einen geschützten Speicherbereich 124 sowie einen Prozessor 126 auf. In dem geschützten Speicherbereich 124 sind nach Ausführungsformen ein privater Schlüssel eines ersten asymmetrischen Schlüsselpaares 128, ein öffentlicher Schlüssel eines zweiten asymmetrischen Schlüsselpaares 130 sowie eine Auftragsliste 132 gespeichert. Das Sicherheitsmodul 106 ist dabei vorzugsweise so konstruiert, dass es nicht möglich ist, die in dem Sicherheitsmodul 106 verarbeitenden Informationen auszulesen.

Der exemplarische Objektanbieter 102 weist neben der Kommunikationsschnittstelle 118 zumindest eine Objektdatenbank 134 sowie eine weitere Speichereinheit 136 auf, wobei in der Objektdatenbank eine Vielzahl von Dateien gespeichert ist, welche beispielsweise Bauteile oder Baugruppen in einer druckerinterpretierbaren Sprache enthalten. In dem weiteren Speicherbereich 136 sind ein öffentlicher Schlüssel eines ersten asymmetrischen Schlüsselpaares 138 sowie ein privater Schlüssel eines zweiten asymmetrischen Schlüsselpaares 140 abgelegt.

Beispielsweise kann nun ein Besitzer des 3D-Druckers 104 im Internet bei dem Objektanbieter 102 die Berechtigung kaufen, ein Objekt aus der Objektdatenbank 134 mit seinem 3D-Drucker 104 zu drucken. Dazu kann beispielsweise der Objektanbieter 102 eine Internetpräsenz anbieten, auf der sich der Nutzer mit einem Benutzernamen und einem Passwort einloggt. Der Nutzer kann beispielsweise bei dem Anbieter 102 zuvor registriert werden, woraufhin der Anbieter 102 dem Nutzer das Sicherheitsmodul 106 zur Verbindung mit seinem 3D-Drucker 104 zuschickt. Bei der Registrierung kann beispielsweise der Nutzer einen Benutzernamen wählen. Aus diesem Benutzernamen kann dann beispielsweise durch identitätsbasierte Verschlüsselung (IBE: Identy Based Encryption) das erste asymmetrische Schlüsselpaar erzeugt werden. Dabei speichert der Anbieter 102 den öffentlichen Schlüssel 138 des ersten asymmetrischen Schlüsselpaares in dem Speicher 136, während der private Schlüssel des ersten Schlüsselpaares 128 in dem geschützten Speicherbereich 124 eines Sicherheitsmoduls 106 hinterlegt wird. Zusätzlich kann der Anbieter 102 noch den öffentlichen Schlüssel eines zweiten asymmetrischen Schlüsselpaares 130 in dem Speicherbereich 124 des Sicherheitsmoduls 106 speichern.

Wenn sich der Inhaber des 3D-Druckers 104 dann mit seinem Benutzernamen bei dem Anbieter 102 anmeldet, ist automatisch eine Zuordnung zu einem Sicherheitsmodul 106 des Endbenutzers gegeben. Sobald der Nutzer des 3D-Druckers 104 nun ein Objekt aus der Objektdatenbank 134 zum Drucken erworben hat, erzeugt das System des Datenbankanbieters 102 einen Datensatz 142, welcher zumindest den Druckauftrag 144 mit dem zu druckenden Objekt und einen symmetrischen Schlüssel 146 enthält. Dabei ist der Druckauftrag 144 mit dem symmetrischen Schlüssel 146 verschlüsselt, während der symmetrische Schlüssel 146 mit dem öffentlichen Schlüssel des ersten asymmetrischen Schlüsselpaares 138 verschlüsselt ist.

Zusätzlich kann der Datensatz 142, welcher an den 3D-Drucker 104 über die Kommunikationsverbindung 116 übermittelt wird, noch eine Signatur 148, eine Prüfsumme 150 sowie eine Auftragsnummer 152 enthalten. Die Signatur 148 kann beispielsweise über den verschlüsselten oder unverschlüsselten Druckauftrag 144 mithilfe des privaten Schlüssels des zweiten asymmetrischen Schlüsselpaares 140 gebildet werden. Die Prüfsumme 150 kann ebenfalls sowohl über den verschlüsselten Druckauftrag 144, den Druckauftrag 144 selbst oder über weitere Elemente des Datensatzes 142, beispielsweise nach dem Prinzip der zyklischen Redundanzprüfung gebildet werden. Bei der Auftragsnummer 152 handelt es sich um eine beispielsweise zufällig gewählte Zahl, welche durch den Anbieter 102 dem Druckauftrag 144 zugeordnet wird. Dabei muss jedoch sichergestellt sein, dass jede Auftragsnummer 152 nur einmal vergeben wird.

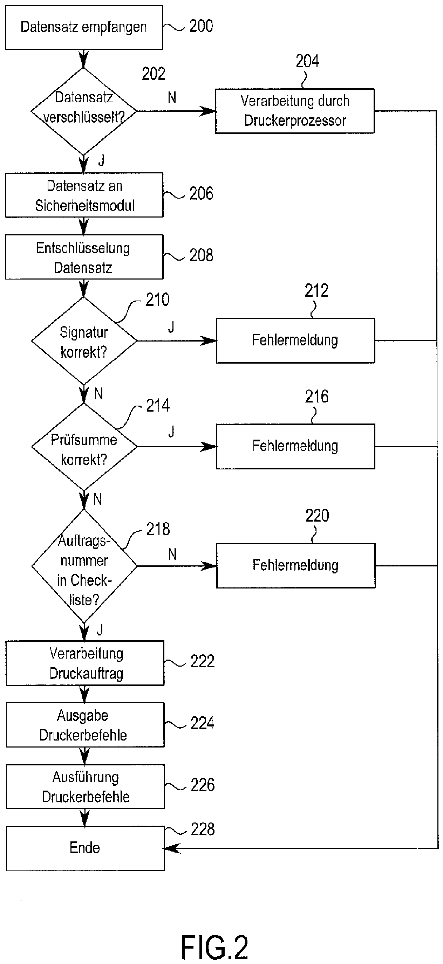

In Figur 2 ist ein Flussdiagramm dargestellt, welches die einzelnen Schritte zeigt, die in dem System 100 ausgeführt werden, sobald der Datensatz 142 von dem 3D-Drucker 104 empfangen wird. Nachdem der Datensatz 142 in Schritt 200 durch den 3D-Drucker empfangen wurde, überprüft der 3D-Drucker 104 zunächst in Schritt 202, ob der Datensatz 142 einen verschlüsselten Druckauftrag 144 enthält. In dem Fall, dass der Druckauftrag 144 in dem Druckschrift 142 nicht verschlüsselt ist, wird der Druckauftrag 144 an den Druckprozessor 122 des 3D-Druckers 104 weitergegeben und in Schritt 204 durch diesen verarbeitet. Die während der Verarbeitung des Druckauftrags 144 erzeugten Druckerbefehle werden dann an die Druckeinheit 120 weitergegeben, sodass das in dem Datensatz enthaltene Objekt durch den 3D-Drucker 104 hergestellt wird.

Wird jedoch in Schritt 202 festgestellt, dass der Druckauftrag 144 in dem Datensatz 142 verschlüsselt ist, übermittelt der 3D-Drucker 104 den Datensatz 142 in Schritt 206 über den Kommunikationskanal 108 an das Sicherheitsmodul 106. Bei dieser Übermittlung muss der Kommunikationskanal 108 nicht zwingend abhörsicher sein, da die übermittelte Information noch verschlüsselt ist. Sobald das Sicherheitsmodul 106 den Datensatz 142 empfangen hat, entschlüsselt es den symmetrischen Schlüssel 146 mithilfe des in dem geschützten Speicherbereich 124 enthaltenen privaten Schlüssels des ersten asymmetrischen Schlüsselpaares 128 208. Mit dem so erhaltenen symmetrischen Schlüssel 146 wird anschließend der Druckauftrag 144 entschlüsselt.

Anschließend wird durch das Sicherheitsmodul 106 in Schritt 210 überprüft, ob die in dem Datensatz 142 enthaltene Signatur 148 korrekt ist. Hierzu ist in dem geschützten Speicherbereich 124 des Sicherheitsmoduls 106 der öffentliche Schlüssel des zweiten asymmetrischen Schlüsselpaares 130 hinterlegt. In dem Fall, dass die Signatur nicht korrekt ist, gibt das Sicherheitsmodul eine Fehlermeldung in Schritt 212 aus. Wird jedoch festgestellt, dass die Signatur 148 des Datensatzes 142 korrekt ist, kann anschließend in einem optionalen Verfahrensschritt 214 geprüft werden, ob die im den Datensatz enthaltene Prüfsumme 150 ebenfalls korrekt ist. Hierzu bildet das Sicherheitsmodul 106 eine zweite Prüfsumme, beispielsweise über den Druckauftrag 144, und vergleicht diese zweite Prüfsumme mit der Prüfsumme 150, welche in dem Datensatz 142 enthalten ist. Wird hierbei festgestellt, dass die erste Prüfsumme nicht der zweiten Prüfsumme entspricht, wird erneut eine Fehlermeldung ausgegeben 216. Wird hingegen festgestellt, dass die Prüfsumme 150 der zweiten Prüfsumme, welche durch das Sicherheitsmodul 106 ermittelt wurde, entspricht, wird das Verfahren fortgesetzt.

In Schritt 218 wird im Anschluss an die Prüfung der Signatur und optional der Prüfung der Prüfsumme überprüft, ob die Auftragsnummer 152, welche in dem Datensatz 142 enthalten ist, in der Auftragsliste 132, die im geschützten Speicherbereich 124 des Sicherheitsmoduls 106 gespeichert ist, ausgeführt ist. Ist dies der Fall, gibt das Sicherheitsmodul 106 in Schritt 220 eine Fehlermeldung aus, da offenbar der Druckauftrag 144 zuvor bereits ausgeführt wurde. Wird hingegen festgestellt, dass die Auftragsnummer 152 noch nicht in der Auftragsliste 132 enthalten ist, fährt das Sicherheitsmodul im Schritt 222 mit der Verarbeitung des Druckauftrags 144 mittels des Prozessors 126 fort. Es sei an dieser Stelle angemerkt, dass die Reihenfolge der Schritte 208, 210, 214 und 218 nahezu beliebig vertauscht werden kann. Es muss lediglich darauf geachtet werden, ob die Signatur oder die Prüfsumme über den verschlüsselten Datensatz 142 oder den zumindest teilentschlüsselten Datensatz 142 gebildet wurden. Dementsprechend muss die Entschlüsselung 208 des Datensatzes 142 vor oder kann auch nach der Prüfung der Signatur bzw. der Prüfsumme erfolgen. Da jedoch vorzugsweise die Auftragsnummer 152 in dem Datensatz 142 nur verschlüsselt vorliegt, sollte die Entschlüsselung des Datensatzes 208 vorzugsweise vor der Prüfung der Auftragsnummer 218 erfolgen.

Im Zuge der Verarbeitung des Druckauftrags in Schritt 222 interpretiert der Prozessor 126 des Sicherheitsmoduls die in dem Druckauftrag 144 enthaltene Informationen, welche beispielsweise als STL-Datei vorliegen, und erzeugt auf Grundlage der so ermittelten Informationen druckerspezifische Befehle, welche von einer Druckeinheit 120 ausgeführt werden können. Anschließend werden die so erzeugten Druckerbefehle über den Kommunikationskanal 108 an den 3D-Drucker ausgegeben 224. Dabei ist vorzugsweise der Kommunikationskanal 108 als abhörsicherer Kommunikationskanal ausgeführt und ferner findet die Kommunikation vorzugsweise direkt zwischen dem Prozessor 126 und der Druckeinheit 120 des 3D-Druckers 104 statt. Sobald die Druckeinheit 120 die Druckerbefehle von dem Sicherheitsmodul 106 empfangen hat, kann es durch Ausführung der Druckerbefehle in Schritt 226 das zu druckende Objekt drucken. Anschließend endet das Verfahren in Schritt 228.

### Bezugszeichenliste

- 100: System
- 102: Objektanbieter
- 104: 3D Drucker
- 106: Sicherheitsmodul
- 108: Kommunikationskanal
- 110: Kommunikationsschnittstelle
- 112: Kommunikationsschnittstelle
- 114: Kommunikationsschnittstelle
- 116: Kommunikationskanal
- 118: Kommunikationsschnittstelle
- 120: Druckeinheit
- 122: Druckprozessor
- 124: geschützter Speicherbereich
- 126: Prozessor
- 128: erster privater Schlüssel
- 130: zweiter öffentlicher Schlüssel
- 132: Auftragsliste
- 134: Objektdatenbank
- 136: Speicher
- 138: erster öffentlicher Schlüssel
- 140: zweiter privater Schlüssel
- 142: Datensatz
- 144: Druckauftrag
- 146: Symmetrischer Schlüssel
- 148: Signatur
- 150: Prüfsumme
- 152: Auftragsnummer

## Patentansprüche

1. Verfahren zur Verarbeitung eines verschlüsselten Druckauftrags (144) durch einen 3D-Drucker (104), wobei der 3D-Drucker (104) mit einem Sicherheitsmodul (106) über einen abhörsicheren Kommunikationskanal (108) verbunden ist, wobei das Sicherheitsmodul (106) einen geschützten Speicherbereich (124) aufweist, wobei in dem geschützten Speicherbereich (124) ein privater Schlüssel (128) eines ersten asymmetrischen Schlüsselpaares gespeichert ist, wobei das Verfahren beinhaltet:
- empfangen eines Datensatzes (142) durch den 3D-Drucker (104), wobei der Datensatz (142) einen asymmetrisch mit einem ersten öffentlichen (138) Schlüssel des ersten asymmetrischen Schlüsselpaares verschlüsselten symmetrischen Schlüssel (146) und einen mit dem symmetrischen Schlüssel (146) verschlüsselten Druckauftrag (144) enthält,
- übermitteln des Datensatzes (142) von dem 3D-Drucker (104) an das Sicherheitsmodul (106),
- entschlüsseln des asymmetrisch verschlüsselten symmetrischen Schlüssels (146) durch das Sicherheitsmodul (106) mit Hilfe des ersten privaten Schlüssels (128),
- entschlüsseln des verschlüsselten Druckauftrags (144) durch das Sicherheitsmodul (106) mit Hilfe des symmetrischen Schlüssels (146),
- übermitteln des entschlüsselten Druckauftrags (144) über den abhörsicheren Kommunikationskanal (108) an den 3D-Drucker (104).

2. Verfahren nach Anspruch 1, wobei das Sicherheitsmodul (106) nach dem Verbinden mit dem 3D-Drucker (104) untrennbar mit dem 3D-Drucker (104) verbunden ist.

3. Verfahren nach Anspruch 2, wobei die untrennbare Verbindung des Sicherheitsmoduls (106) mit dem 3D-Drucker (104) ein mechanisches Verbinden umfasst.

4. Verfahren nach einem der Ansprüche 2 oder 3, wobei aufgrund des Verbindens des Sicherheitsmoduls (106) mit dem 3D-Drucker (104) ein Verknüpfungsprozess auf dem 3D-Drucker (104) und/oder dem Sicherheitsmodul (106) gestartet wird, wobei die untrennbare Verbindung des Sicherheitsmodul (106)s mit dem 3D-Drucker (104) als Resultat des Verknüpfungsprozesses eine eindeutige logische Verknüpfung des Sicherheitsmoduls (106) mit dem 3D-Drucker (104) umfasst.

5. Verfahren nach einem der Ansprüche 2-4, wobei das untrennbare Verbinden dergestalt erfolgt, dass ein nachträgliches Entfernen des Sicherheitsmoduls (106) von dem 3D-Drucker (104) zu einer zumindest teilweisen Funktionsunfähigkeit des 3D-Druckers (104) und/oder des Sicherheitsmoduls (106) führt.

6. Verfahren nach einem der vorhergehenden Ansprüche, wobei in dem Sicherheitsmodul (106) ein zweiter öffentlicher Schlüssel (130) eines zweiten asymmetrischen Schlüsselpaares gespeichert ist, wobei zumindest ein Teil des Datensatzes (142) mit einem zweiten privaten Schlüssel (140) des zweiten asymmetrischen Schlüsselpaares signiert ist, wobei das Sicherheitsmodul (106) nach dem Empfangen des Datensatzes (142) von dem 3D-Drucker (104) die Signatur (148) mit dem zweiten öffentlichen Schlüssel (130) verifiziert, wobei das Entschlüsseln oder Übermitteln des entschlüsselten Druckauftrags (144) über den Kommunikationskanal (108) an den 3D-Drucker (104) nur dann erfolgt, wenn die Signatur des Datensatzes (142) durch das Sicherheitsmodul (106) verifiziert wurde.

7. Verfahren nach einem der vorhergehenden Ansprüche, wobei der Datensatz (142) eine erste Prüfsumme (150) des verschlüsselten Druckauftrags (144), des Druckauftrags (144) und/oder des Datensatzes (142) enthält, wobei das Verfahren ferner umfasst:
- berechnen einer zweiten Prüfsumme des verschlüsselten Druckauftrags (144), des Druckauftrags (144) und/oder des Datensatzes (142) durch das Sicherheitsmodul (106),
- vergleich der ersten Prüfsumme (150) mit der zweiten Prüfsumme durch das Sicherheitsmodul (106),
wobei das Übermitteln des Druckauftrags (144) an den 3D-Drucker (104) nur dann erfolgt, wenn die zweite Prüfsumme und die erste Prüfsumme (150) identisch sind.

8. Verfahren nach einem der vorhergehenden Ansprüche, wobei das Verfahren ferner das Löschen des Datensatzes (142), des verschlüsselten Druckauftrags (144) und/oder des Druckauftrags (144) unmittelbar nach Übermittlung des Druckauftrags (144) an den 3D-Drucker (104) beinhaltet.

9. Verfahren nach einem der vorhergehenden Ansprüche, wobei in dem Datensatz (142) dem Druckauftrag (144) eine Auftragsnummer (152) zugeordnet ist, wobei das Sicherheitsmodul (106) eine in dem geschützten Speicherbereich (124) des Sicherheitsmoduls (106) gespeicherte Auftragsliste (132) aufweist, wobei die Auftragsliste (132) die Auftragsnummern (152) von Druckaufträgen (144) beinhaltet, die zuvor an den 3D-Drucker (104) übermittelt wurden, wobei das Verfahren umfasst:
- lesen der dem Druckauftrag (144) zugeordneten Auftragsnummer (152),
- prüfen, ob die Auftragsnummer (152) in der Auftragsliste (132) enthalten ist,
wobei die Übermittlung des entschlüsselten Druckauftrags (144) an den 3D-Drucker (104) nur dann erfolgt, wenn die Auftragsnummer (152) nicht in der Auftragsliste (132) enthalten ist.

10. Verfahren nach Anspruch 9, wobei die Auftragsnummer (152) mit dem symmetrischen Schlüssel (146) oder mit dem ersten öffentlichen Schlüssel (138) verschlüsselt ist, wobei das Lesen der Auftragsnummer (152) ein Entschlüsseln der Auftragsnummer (152) beinhaltet.

11. Verfahren nach Anspruch 9 oder 10, wobei die Auftragsnummer (152) mit dem zweiten privaten Schlüssel (140) signiert ist, wobei das Verfahren ferner das Verifizieren der Signatur der Auftragsnummer (152) mit Hilfe des zweiten öffentlichen Schlüssels (130) durch das Sicherheitsmodul (106) umfasst, wobei die Übermittlung des Druckauftrags (144) an den 3D-Drucker (104) nur dann erfolgt, wenn die Signatur der Auftragsnummer (152) durch das Sicherheitsmodul (106) verifiziert wurde.

12. Verfahren nach einem der vorhergehenden Ansprüche, wobei der entschlüsselte Druckauftrag (144) ein in einer Objekt-Beschreibungssprache codiertes zu druckendes Objekt beinhaltet, wobei der 3D-Drucker (104) eine Druckeinheit (120) aufweist, wobei die Druckeinheit (120) dazu ausgebildet ist, eine Sequenz von Befehlen in einer generischen Drucker-Steuerungssprache zu interpretieren, sodass durch die Druckeinheit (120) ein dreidimensionales Objekt auf Grundlage der interpretierten Befehle gedruckt wird, wobei das Verfahren ferner beinhaltet:
- konvertieren des Druckauftrags (144) in eine Sequenz von Befehlen in der generischen Drucker-Steuerungs-Sprache durch Interpretation des in dem entschlüsselten Druckauftrag (144) beschriebenen zu druckenden Objekts durch das Sicherheitsmodul (106),
- übermitteln der Sequenz von Befehlen an die Druckeinheit (120) durch das Sicherheitsmodul (106) über den abhörsicheren Kommunikationskanal (108).

13. Sicherheitsmodul (106) mit zumindest einem geschützten Speicherbereich (124) und einer Kommunikationsschnittstelle (112), wobei in dem geschützten Speicherbereich (124) ein privater Schlüssel (128) eines ersten asymmetrischen Schlüsselpaares gespeichert ist, wobei das Sicherheitsmodul (106) dazu ausgebildet ist:
- einen Datensatz (142) von einem 3D-Drucker (104) über die Kommunikationsschnittstelle zu empfangen, wobei der Datensatz (142) einen asymmetrisch mit einem ersten öffentlichen Schlüssel (138) des ersten asymmetrischen Schlüsselpaares verschlüsselten symmetrischen Schlüssel (146) und einen mit dem symmetrischen Schlüssel (146) verschlüsselten Druckauftrag (144) enthält,
- den asymmetrisch verschlüsselten symmetrischen Schlüssel (146) mit Hilfe des ersten privaten Schlüssels (128) zu entschlüsseln,
- den verschlüsselten Druckauftrag (144) mit Hilfe des symmetrischen Schlüssels (146) zu entschlüsseln, und
- den entschlüsselten Druckauftrag (144) über die Kommunikationsschnittstelle (112) an den 3D-Drucker (104) zu übermitteln.

14. System (100) aus einem 3D-Drucker (104) und einem Sicherheitsmodul (106) nach Anspruch 13, wobei der 3D-Drucker (104) über einen abhörsicheren Kommunikationskanal (108) mit dem Sicherheitsmodul (106) verbunden ist.

## Claims

1. A method for processing an encrypted print job (144) by a 3D printer (104), the 3D printer (104) being connected to a security module (106) via a tap-proof communication channel (108), the security module (106) comprising a protected memory area (124), a private key (128) of a first asymmetric key pair being stored in the protected memory area (124), the method comprising:
- receiving a data set (142) by the 3D printer (104), the data set (142) including a symmetric key (146) that is asymmetrically encrypted with a first public key (138) of the first asymmetric key pair and a print job (144) that is encrypted with the symmetric key (146);
- transmitting the data set (142) from the 3D printer (104) to the security module (106);
- decrypting the asymmetrically encrypted symmetric key (146) by the security module (106) by way of the first private key (128);
- decrypting the encrypted print job (144) by the security module (106) by way of the symmetric key (146); and
- transmitting the decrypted print job (144) via the tap-proof communication channel (108) to the 3D printer (104).

2. The method according to claim 1, wherein the security module (106), after being connected to the 3D printer (104), is inseparably connected to the 3D printer (104).

3. The method according to claim 2, wherein the inseparable connection of the security module (106) to the 3D printer (104) comprises a mechanical connecting.

4. The method according to either claim 2 or 3, wherein, based on the connection of the security module (106) to the 3D printer (104), an association process is started on the 3D printer (104) and/or the security module (106), the inseparable connection of the security module (106) to the 3D printer (104), as a result of the association process, comprising an unambiguous logical association of the security module (106) with the 3D printer (104).

5. A method according to any one of claims 2 to 4, wherein the inseparable connection takes place in such a way that a subsequent removal of the security module (106) from the 3D printer (104) results in at least partial inoperability of the 3D printer (104) and/or of the security module (106).

6. A method according to any one of the preceding claims, wherein a second public key (130) of a second asymmetric key pair is stored in the security module (106), at least a portion of the data set (142) being signed with a second private key (140) of the second asymmetric key pair, the security module (106) verifying the signature (148) with the second public key (130) after having received the data set (142) from the 3D printer (104), the decryption or transmission of the decrypted print job (144) via the communication channel (108) to the 3D printer (104) only taking place if the signature of the data set (142) has been verified by the security module (106).

7. A method according to any one of the preceding claims, wherein the data set (142) includes a first checksum (150) of the encrypted print job (144), of the print job (144) and/or of the data set (142), the method furthermore comprising:
- calculating a second checksum of the encrypted print job (144), of the print job (144) and/or of the data set (142) by the security module (106); and
- comparing the first checksum (150) to the second checksum by the security module (106),
the print job (144) only being transmitted the 3D printer (104) if the second checksum and the first checksum (150) are identical.

8. A method according to any one of the preceding claims, wherein the method furthermore comprises deleting the data set (142), the encrypted print job (144) and/or the print job (144) immediately after the print job (144) has been transmitted to the 3D printer (104).

9. A method according to any one of the preceding claims, wherein, in the data set (142), a job number (152) is assigned to the print job (144), the security module (106) including a job list (132) stored in the protected memory area (124) of the security module (106), the job list (132) including the job numbers (152) of print jobs (144) that were previously transmitted to the 3D printer (104), the method comprising:
- reading the job number (152) assigned to the print job (144); and
- checking whether the job number (152) is contained in the job list (132),
the decrypted print job (144) only being transmitted to the 3D printer (104) if the job number (152) is not contained in the job list (132).

10. The method according to claim 9, wherein the job number (152) is encrypted with the symmetric key (146) or with the first public key (138), the reading of the job number (152) including a decryption of the job number (152).

11. The method according to claim 9 or 10, wherein the job number (152) is signed with the second private key (140), the method furthermore comprising verifying, by the security module (106), the signature of the job number (152) by way of the second public key (130), the print job (144) only being transmitted to the 3D printer (104) if the signature of the job number (152) has been verified by the security module (106).

12. A method according to any one of the preceding claims, wherein the decrypted print job (144) includes an object to be printed that is encoded in an object description language, the 3D printer (104) comprising a print unit (120), the print unit (120) being designed to interpret a sequence of commands in a generic printer control language so that a three-dimensional object is printed by the print unit (120) based on the interpreted commands, the method furthermore comprising:
- converting the print job (144) into a sequence of commands in the generic printer control language by interpreting the object to be printed described in the decrypted print job (144) by the security module (106); and
- transmitting the sequence of commands to the print unit (120) by the security module (106) via the tap-proof communication channel (108).

13. A security module (106), comprising at least one protected memory area (124) and a communication interface (112), a private key (128) of a first asymmetric key pair being stored in the protected memory area (124), the security module (106) being designed:
- to receive a data set (142) from a 3D printer (104) via the communication interface, the data set (142) containing a symmetric key (146) that is asymmetrically encrypted with a first public key (138) of the first asymmetric key pair and a print job (144) that is encrypted with the symmetric key (146);
- to decrypt the asymmetrically encrypted symmetric key (146) by way of the first private key (128);
- to decrypt the encrypted print job (144) by way of the symmetric key (146); and
- to transmit the decrypted print job (144) via the communication interface (112) to the 3D printer (104).

14. A system (100), comprising a 3D printer (104) and a security module (106) according to claim 13, wherein the 3D printer (104) is connected to the security module (106) via a tap-proof communication channel (108).

## Revendications

1. Procédé de traitement d'un travail d'impression (144) crypté par une imprimante 3D (104), l'imprimante 3D (104) étant connectée à un module de sécurité (106) par le biais d'un canal de communication (108) anti-écoute, le module de sécurité (106) présentant une zone de mémoire sécurisée (124), une clé privée (128) d'une première paire de clés asymétrique étant stockée dans la zone de mémoire sécurisée (124), où le procédé contient :
- la réception d'un ensemble de données (142) par l'imprimante 3D (104), où l'ensemble de données (142) contient une clé symétrique (146) cryptée de manière asymétrique avec une première clé publique (138) de la première paire de clés asymétrique et un travail d'impression (144) crypté avec la clé symétrique (146),
- la transmission de l'ensemble de données (142) de l'imprimante 3D (104) au module de sécurité (106),
- le décryptage de la clé symétrique (146) cryptée de manière asymétrique par le module de sécurité (106) à l'aide de la première clé privée (128),
- le décryptage du travail d'impression (144) crypté par le module de sécurité (106) à l'aide de la clé symétrique (146),
- la transmission du travail d'impression (144) décrypté à l'imprimante 3D (104) par le biais du canal de communication (108) anti-écoute.

2. Procédé selon la revendication 1, dans lequel le module de sécurité (106) est connecté de manière inséparable avec l'imprimante 3D (104) après la connexion avec l'imprimante 3D (104).

3. Procédé selon la revendication 1, dans lequel la connexion inséparable du module de sécurité (106) avec l'imprimante 3D (104) comprend une connexion mécanique.

4. Procédé selon l'une des revendications 2 ou 3, dans lequel, en raison de la connexion du module de sécurité (106) avec l'imprimante 3D (104), un processus d'interconnexion est démarré sur l'imprimante 3D (104) et/ou le module de sécurité (106), où la connexion inséparable du module de sécurité (106) avec l'imprimante 3D (104) comprend une interconnexion univoque logique du module de sécurité (106) avec l'imprimante 3D (104) en tant que résultat du processus d'interconnexion.

5. Procédé selon l'une des revendications 2 à 4, dans lequel la connexion inséparable est conçue de telle manière qu'un retrait ultérieur du module de sécurité (106) de l'imprimante 3D (104) conduit à au moins une inopérabilité partielle de l'imprimante 3D (104) et/ou du module de sécurité (106).

6. Procédé selon l'une des revendications précédentes, dans lequel une deuxième clé publique (130) d'une deuxième paire de clés asymétrique est stockée dans le module de sécurité (106), où au moins une partie de l'ensemble de données (142) est signée avec une deuxième clé privée (140) de la deuxième paire de clés asymétrique, où le module de sécurité (106) vérifie la signature (148) avec la deuxième clé publique (130) après la réception de l'ensemble de données (142) par l'imprimante 3D (104), où le décryptage ou la transmission du travail d'impression (144) décrypté n'a lieu vers l'imprimante 3D (104) par le biais du canal de transmission (108) que lorsque la signature de l'ensemble de données (142) a été vérifiée par le module de sécurité (106).

7. Procédé selon l'une des revendications précédentes, dans lequel l'ensemble de données (142) contient une première somme de contrôle (150) du travail d'impression (144) crypté, du travail d'impression (144) et/ou de l'ensemble de données (142), le procédé comprenant en outre :
- le calcul d'une deuxième somme de contrôle du travail d'impression (144) crypté, du travail d'impression (144) et/ou de l'ensemble de données (142) par le module de sécurité (106),
- la comparaison de la première somme de contrôle (150) avec la deuxième somme de contrôle par le module de sécurité (106),
où la transmission du travail d'impression (144) à l'imprimante 3D (104) n'a lieu que si la deuxième somme de contrôle et la première somme de contrôle sont identiques.

8. Procédé selon l'une des revendications précédentes, où le procédé contient en outre l'effacement de l'ensemble de données (142) du travail d'impression (144) crypté et/ou du travail d'impression (144) immédiatement après la transmission du travail d'impression (144) à l'imprimante 3D (104).

9. Procédé selon l'une des revendications précédentes, dans lequel un numéro de travail (152) est associé au travail d'impression (144) dans l'ensemble de données (142), où le module de sécurité (106) présente une liste de travaux (132) stockée dans la zone de mémoire (124) sécurisée du module de sécurité (106), où la liste de travaux (132) contient les numéros des travaux (152) de travaux d'impression (144) qui ont été transmis auparavant à l'imprimante 3D (104), le procédé comprenant :
- la lecture du numéro de travail (152) associé au travail d'impression (144),
- la vérification si le numéro de travail (152) est contenu dans la liste de travaux (132),
où la transmission du travail d'impression (144) décrypté n'a lieu vers l'imprimante 3D (104) que si le numéro de travail (152) n'est pas contenu dans la liste de travaux (132).

10. Procédé selon la revendication 9, dans lequel le numéro de travail (152) est crypté avec la clé symétrique (146) ou avec la première clé publique (138), où la lecture du numéro de travail (152) contient un décryptage du numéro de travail (152).

11. Procédé selon la revendication 9 ou la revendication 10, dans lequel le numéro de travail (152) est signé avec la deuxième clé privée (140), où le procédé comprend en outre la vérification de la signature du numéro de travail (152) à l'aide de la deuxième clé publique (130) par le module de sécurité (106), où la transmission du travail d'impression (144) à l'imprimante 3D (104) n'a lieu que si la signature du numéro de travail (152) a été vérifiée par le module de sécurité (106).

12. Procédé selon l'une des revendications précédentes, dans lequel le travail d'impression (144) décrypté contient un objet à imprimer codé dans un langage de description d'objet, où l'imprimante 3D (104) présente une unité d'impression (120), où l'unité d'impression (120) est conçue pour interpréter une séquence de commandes dans un langage de commande d'imprimante générique de sorte qu'un objet tridimensionnel est imprimé par l'unité d'impression (120) sur la base des commandes interprétées, le procédé contenant en outre :
- la conversion du travail d'impression (144) en une séquence de commandes dans le langage de commande d'imprimante générique par l'interprétation de l'objet à imprimer décrit dans le travail d'impression (144) décrypté par le module de sécurité (106),
- la transmission de la séquence de commandes à l'unité d'impression (120) par le module de sécurité (106) par le biais du canal de communication (108) anti-écoute.

13. Module de sécurité (106) doté d'au moins une zone de mémoire (124) sécurisée et d'une interface de communication (112), où une clé privée (128) d'une première paire de clés asymétrique est stockée dans la zone de mémoire (124) sécurisée, le module de sécurité (106) étant conçu pour :
- recevoir un ensemble de données (142) à partir d'une imprimante 3D (104) par le biais de l'interface de communication, où l'ensemble de données (142) contient une clé symétrique (146) cryptée de manière asymétrique avec une première clé publique (138) de la première paire de clés asymétrique et un travail d'impression (144) crypté avec la clé symétrique (146),
- décrypter la clé symétrique (146) cryptée de manière asymétrique à l'aide de la première clé privée (128),
- décrypter le travail d'impression (144) à l'aide de la clé symétrique (146), et
- transmettre le travail d'impression (144) décrypté à l'imprimante 3D (104) par le biais de l'interface de communication (112).

14. Système (100) à base d'une imprimante 3D (104) et d'un module de sécurité (106) selon la revendication 13, dans lequel l'imprimante 3D (104) est connectée avec le module de sécurité (106) par le biais d'un canal de communication (108) anti-écoute.
